Europäisches Patentamt

European Patent Office

Office européen des brevets

(19)

(11) Publication number : **0 391 404 B1**

(12) **EUROPEAN PATENT SPECIFICATION**

(45) Date of publication of patent specification :
18.10.95 Bulletin 95/42

(51) Int. Cl.⁶ : **G06F 15/76**

(21) Application number : **90106502.9**

(22) Date of filing : **05.04.90**

(54) **Data processing system.**

(30) Priority : **05.04.89 JP 84783/89**
**28.04.89 JP 107150/89**

(43) Date of publication of application :
**10.10.90 Bulletin 90/41**

(45) Publication of the grant of the patent :
**18.10.95 Bulletin 95/42**

(84) Designated Contracting States :
**BE DE FR GB IT NL SE**

(56) References cited :
**EP-A- 0 327 817**
**US-A- 3 327 291**
**IEEE FIRST INTERNATIONAL CONFERENCE
ON NEURAL NETWORKS 21-24 June 1987,
pages IV /381-388 San Diego, California, US,
R.L. WATROUS et al.:"Learning Phonetic
Features using Connectionist Networks: An
experiment in Speech Recognition"**

(73) Proprietor : **YOZAN INC.**
**2-22-2, Koishikawa,**
**Bunkyo-ku**
**Tokyo 112 (JP)**
Proprietor : **SHARP KABUSHIKI KAISHA**
**22-22 Nagaike-cho**
**Abeno-ku**
**Osaka 545 (JP)**

(72) Inventor : **Takatori, Sunao**
**c/o Yozan Inc.,**
**2-22-2, Koishikawa Bunkyo-ku**
**Tokyo 112 (JP)**
Inventor : **Kumagai, Ryohei**
**c/o Yozan Inc.,**
**2-22-2, Koishikawa Bunkyo-ku**
**Tokyo 112 (JP)**
Inventor : **Yamamoto, Makoto**
**c/o Yozan Inc.,**
**2-22-2, Koishikawa Bunkyo-ku**
**Tokyo 112 (JP)**
Inventor : **Matsumoto, Koji**
**c/o Yozan Inc.,**
**2-22-2, Koishikawa Bunkyo-ku**
**Tokyo 112 (JP)**

(74) Representative : **Grünecker, Kinkeldey,**
**Stockmair & Schwanhäusser Anwaltssozietät**
**Maximilianstrasse 58**
**D-80538 München (DE)**

EP 0 391 404 B1

## Description

The present invention relates to a data processing system according to the precharacterizing part of claim 1.

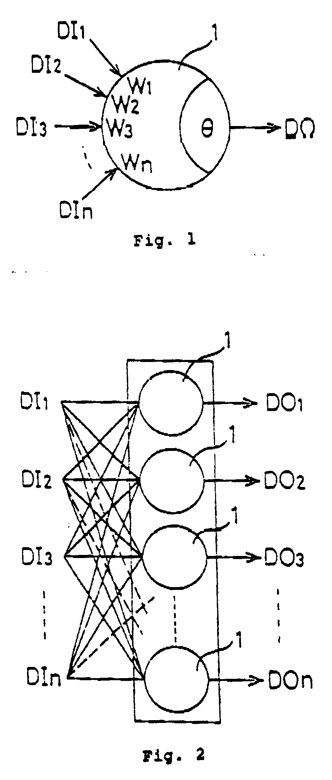

The neural network in this kind of data processing system consists of layers including neuron model (neuron, hereinafter) 1 parallelly settled, as shown in Fig. 1. In neuron 1, data DI1, DI1, DI3,...DIn to be inputted to neuron 1 from the outside are multiplied by weights w4, w2, w3,...wn, respectively. Output data DO corresponds to the comparison result between the sum and a threshold value "$\theta$". There are various manners to carry out the comparation. One is that output data DO becomes "1" if the sum is $> \theta$ and beeomes "0" if the sum is $< \theta$.

With the neural network of Fig 2, $2^n$ kinds of values are expressed by this bit patterns when input data is a bit pattern of n bits. Therefore, $2^n$ number of neurons 1 are necessary for neural network to judge the input data. This means that 16 neurons 1 are necessary for a bit pattern of 4 bits: the number of neurons gets doubled for every additional one bit.

When a neuronl network is constructed by a lot of layers, the number of neurons increases in response to the increases of the layers ("neural layers" hereinafter), and the number of input lines to be connected to neurons, that is, the number of synapses, also increases.

A neural layer is constructed by arranging such neurons in parallel, and said neural layer is connected serially to other layers. There has been no established theory of the number of neurons or layers to be used. For example, according to the Perception model suggested by Rosenblatt, trials have been carried out in order to set the number of layers to be three or the number of neurons to be equal to the input data. Therefore, there has never been clarified the relationship between the data processing to be performed in a neural network and the capacity or construction of neural network. Accordingly, it is unknown if constructed neural network achieve the expected performance until an experiment result is obtained.

It is the object of the present invention to provide a data processing system which performs the processing with a minimum number of neurons and synapses. Document IEEE FIRST INTERNATIONAL CONFERENCE ON NEURAL NETWORKS, 21-24 June 1987, pages IV/381-388; San Diego, Californie, US; R.L. WATROUS et al. : "Learning Phonetic Features using connectionist networks : An Experiment in Speech Recognition" discloses learning phonetic features from speech data using connectionist networks. A "temporal flow model" is introduced in which sampled speech data flows through a parallel network from input to output units. The network uses hidden units with recurrent links to capture spectral/temporal characteristics of phonetic features. A supervised learning algorithm is also described which performs gradient descent in weight space using a coarse aproximation of the desired output as target function.

This object is solved by the subject matter of claim 1.

The larger the number of neurons or synapses is, the larger the number of weight data as well as the number of threshold data to be stored in a neural network becomes. Accordingly, a big capacity of memory is necessary for a whole data processing system. Moreover, since many times of multiplications of input data by weights, and of computations of thresholding are necessary, computation speed becomes slow.

A data processing system according to the present invention has a characteristics that number of neural layers corresponds to a difference between abstraction degree of output data and that of input data.

A data processing system according to the present invention has a further characteristics that data of higher abstraction degree is directly inputted to later stage in neural layers.

The higher the abstraction degree is, the larger the number of neural layers is. Consequently, an expected processing is surely achieved.

The number of neurons and synapses are minimized by the above construction. Consequently, the capacity of necessary memory and processing time are saved.

BRIEF DESCRIPTION OF THE DRAWINGS

Fig. 1 shows a well-known neural model.
Fig. 2 shows a well-known neural network of one layer.
Fig. 3 (a) shows the first embodiment of the present invention.
Fig. 3 (b) shows the second embodiment of the present invention.
Fig. 3 (c) shows the third embodiment of the present invention.
Fig. 4 (a) shows a neural network to be compared with the following embodiment.
Fig. 4 (b) shows another neural network to be compared with other embodiments.
Fig. 4 (c) shows the fourth embodiment of the present invention.
Fig. 5 shows a block diagram of a computer portion to be connected to a data processing system of the present invention.
Fig. 6 shows the block diagram of another computer portion to be connected to a data processing system of the present invention.
Fig. 7 shows the fifth embodiment.
Fig. 8 (a) shows the sixth embodiment.
Fig. 8 (b) shows the seventh embodiment.
Fig. 9 (a) shows the eighth embodiment.

Fig. 9 (b) shows the ninth embodiment.

Fig. 10 (a) shows 3x3 convolution of an image.

Fig. 10 (b) shows patterns of 3x3 convolution with end point as center pixel.

Fig. 11 shows tenth embodiment.

Fig. 12 shows eleventh embodiment.

Fig. 13 shows twelfth embodiment.

Fig. 14 (a) shows thirteenth embodiment.

Fig. 14 (b) shows fourteenth embodiment.

Fig. 15 shows a diagram of a data processing system for learning Mode I.

Fig. 16 shows a diagram of a data processing system for learning Mode II.

Fig. 17 shows a diagram of the weight change along learning times.

## PREFERRED EMBODIMENT OF THE PRESENT INVENTION

Hereinafter, embodiments of a data processing system according to the present invention are described with referring to the attached drawings.

Processing in a practical neural network is extremely complex, however some embodiments for quite simple processings are described first for easy undarstanding of the basic concept of the present invention.

Fis. 3 (a) shows the first embodiment of the present invention, which performs processing of a logic computation of (A+B).

The data processing system comprises one neural layer 20 in which neurons of the same number as the data, that is 2 neurons of 21 and 22, are settled. Data A and B are inputted to the neurons 21 and 22 respectively. Neurons 21 and 22 have connection portions for data input lines, for which weight of synapse Wis and threshold θ are given. The weight W1 changes due to learning so that neurons come to perform an expected processing ($\Sigma WiAi-\theta$). In this embodiment, only one neurons 21 performs the logic computation of (A+B) and the other neuron 22 does not work substantially. That is to say, the following computation is performed. It is settled that W1=1, W2=1 and θ=1 in neuron 21, for instance. Neuron 21 outputs an output data "1" when

$$AW1 + BW2 > = 1 \quad (1)$$

On the other hand, it is settled that W3=0, W4=0 and θ=1 in neuron 22, for instance. Therefore, the formula below is always true.

$$AW3 + BW4 < 1 \quad (2)$$

It means that the value of AW3+BW4 does not exceed the threshold θ and output data "0" is outputted.

When at least one of data A and B is "1", neuron 21 outputs an output data "1" and the data processing system of the present invention executes the logic computation (A+B).

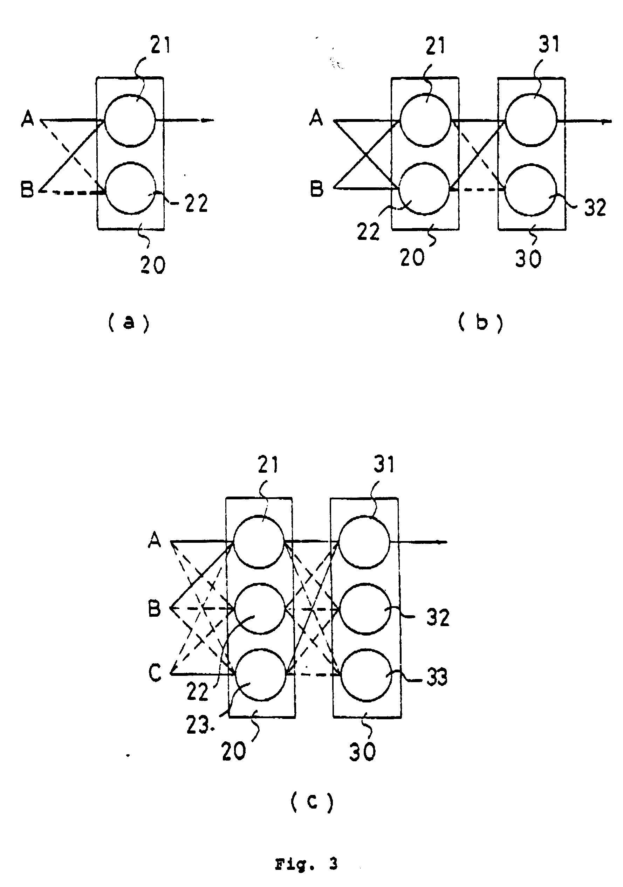

Fig. 3 (b) shows the second embodiment of the present invention. The data processing system executes a logic computation of (A⊕B). ⊕ shows the "exclusive logical addition". The data processing system comprises 2 neural layers 20 and 30. Neurons 21 and 22 are included in the first neural layer 20; neurons 31 and 32 are included in the second-final-layer 30. Data A and B are inputted to the neuron 21 and 22, respectively, in the first neural layer 20.

Logic computation of (A⊕B) is expanded as (AB+AB). Neuron 21 performs the processing of (AB) and neuron 22 performs the processing of (AB) in neural layer 20. Here, it is settled that W1=-1, W2=1 and θ=1 in neuron 21, for instance. Neuron 21 outputs an output data "1" when the following formula is satisfied.

$$AW1 + BW2 = 1 \quad (3)$$

On the other hand, it is settled that W3=1, W4=-1 and θ=1 in neuron 22, for instance. Neuron 22 outputs an output data "1" when the following formula is satisfied.

$$AW3 + BW4 > = 1 \quad (4)$$

Neuron 31 in neural layer 30 executes the processing of (AB+AB). It is settled that W5=1, W6=1, θ=1, the output of neuron 21 is Y1 and that of neuron 22 is Y2, for instance. Neuron 31 outputs "1" when the following formula is satisfied.

$$Y1W5 + Y2W6 > = 1 \quad (5)$$

Neuron 32 does not work substantially. Neuron 31 outputs an output data "1" when data A and B are different from each other, and outputs "0" when both of them are "1" or "0". The data processing system of this embodiment executes the logic computation of (A⊕B).

Fig. 3 (c) shows the third embodiment of the present invention. The data processing system comes to perform a logic computation of (A+B)C through learning. It comprises two neural layers 20 and 30. The first neural layer 20 includes neurons 21, 22 and 23 and the next neural layer 30 includes neurons 31, 32 and 33. Data A, B and C are inputted to the neurons 21, 22 and 23, respectively, in the first neural layer 20.

Neuron 21 processes (A+B), neuron 22 does not work substantially and neuron 23 outputs an input data C as it is. That is, it is settled that W1=1, W2=1, W3=0 and θ=1 in neuron 21, for instance. Neuron 21 outputs the output data "1" when the following formula is satisfied.

$$AW1 + BW2 + CW3 > = 1 \quad (6)$$

Neuron 22 does not work substantially, whose weights W4, W5 and W6 are settled 0 and threshold θ is settled 1. Neuron 23 outputs an output data "1" when the following formula is satisfied.

$$AW7 + BW8 + CW9 > = 1 \quad (7)$$

Otherwise, it outputs an output data "0".

Neuron 31 in neural layer 30 processes (A+B)C according to the output data of neurons 21 and 23 in neural layer 20. It is settled that W11=1, W12=, W13-1, θ=2, the output of neuron 21 is Y1, the output of neuron 22 is Y2 and the output of neuron 23 is Y3.

Neuron 31 outputs an output data "1" when the following formula is satisfied.

$$Y1W11 + Y2W12 + Y3W13 >= 2 \quad (8)$$

Neurons 32 and 33 do not work substantially.

Neuron 31 outputs an output data "1" when at least one of data A and B is "1" and data C is "1". The data processing system of this embodiment execute a logic computation (A+B)C.

Here, the basic concept of the present invention is described.

Data A and B in the first embodiment are connected by a logic operator of "+(OR)". the logic computation of (A+B) is executed in a neural layer 20.

Data A and B are connected by "⊕(EX-OR)". The logic computation (A⊕B) is expanded as (AB+AB). AB and AB are executed in the first neural layer 20, that is, a logic computation of an operator "x(AND)". Next, (AB+AB), the logic computation of the action factor "+(OR)", is executed in the second neural layer 30. The logic computation of the second embodiment is executed through 2 neural layers.

Data A and B are connected by an operator "+(OR)": this logic computation is executed in the first neural layer 20. The result of the logic computation is connected to data C by an operator "x(AND)". The logic computation is (A+B)C, which is executed in the second neural layer 30. The logic computation of the third embodiment is executed through 2 neural layers.

When the processing of data processing system is expressed by the logic computation factors "AND" and "OR", the number of neural layers is increased according to the number of logic computation operators of the construction of logic computation.

It is assumed that how high a data is abstracted can be defined, and here, it is defined as "abstraction degree". It is also assumed that the processing of a neuron is expressed only by the following formula.

$$\Sigma WiAi - \theta \quad (9)$$

where, Wi is a weight, Ai is an input data and θ is threshold.

It can be defined that an output data of a neuron is higher in abstraction degree than input data. It is also defined that data connected by an operator with each other are the same in abstraction degree to each other.

From these definition, assuming data A and B of the processings of AB and AB in neuron 21 and 22 are of abstraction degree of "0", in the first neural layer 20 of the second embodiment for performing the logic computation (A⊕B), the output data to the neurons in the second neural layer 30 can be defined as abstraction degree of "1". And the calculation result of (AB+AB) in the second neural layer 30 can be defined as abstraction degree of "2". Namely, since the last output data is the second degree, the logic computation (A⊕B) needs 2 neural layers. The total layers of a neural network can be determined by subtracting the abstraction degree of input data from the abstraction degree of the final output data. That is to say, the number of neural layers is the difference between the abstraction degree of input data and the abstraction degree of the final output data.

This is the basic concept of the present invention. The degree indicates how high data is abstracted. The abstraction can be evaluated from characteristics of the data. For example, pixel data is zero abstraction degree; end point data, data of number of holes and Euler number are higher in abstraction degree than pixel data. For obtaining an end point data from pixel data, neural layers are necessary as many as the substraction result of the abstraction degree of a pixel data from the degree of end point data.

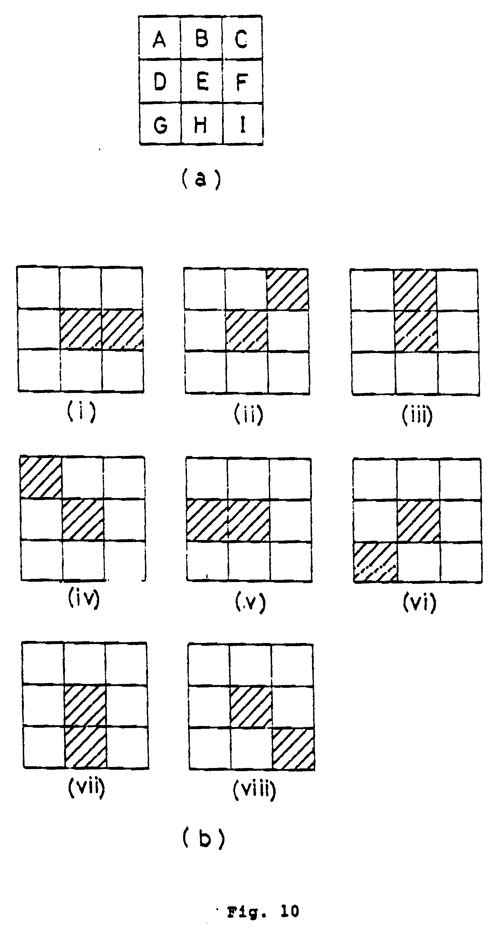

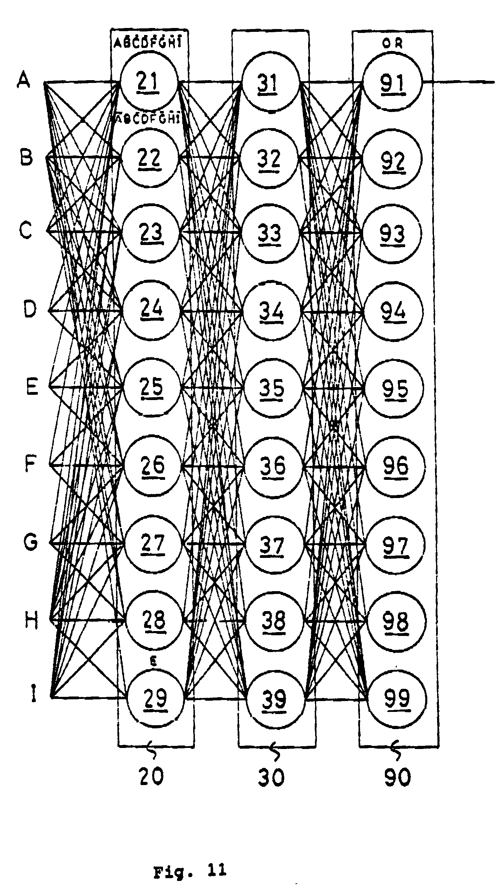

The embodiments for processing end points will be described later with referring to Fig. 10 and Fig. 11.

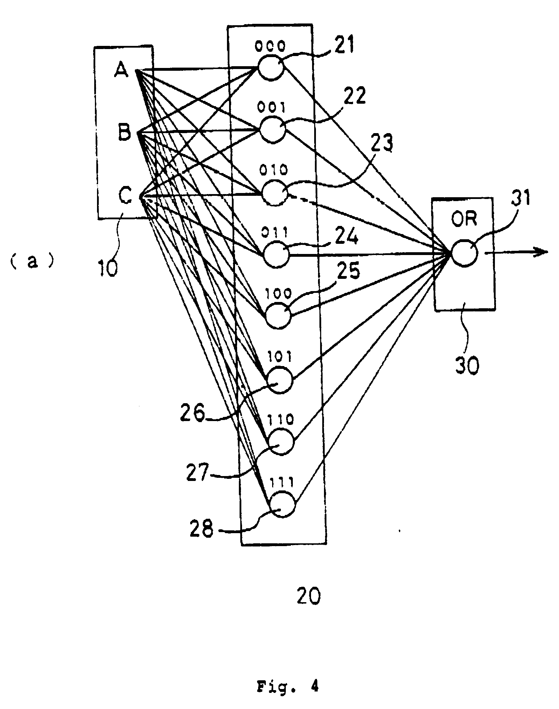

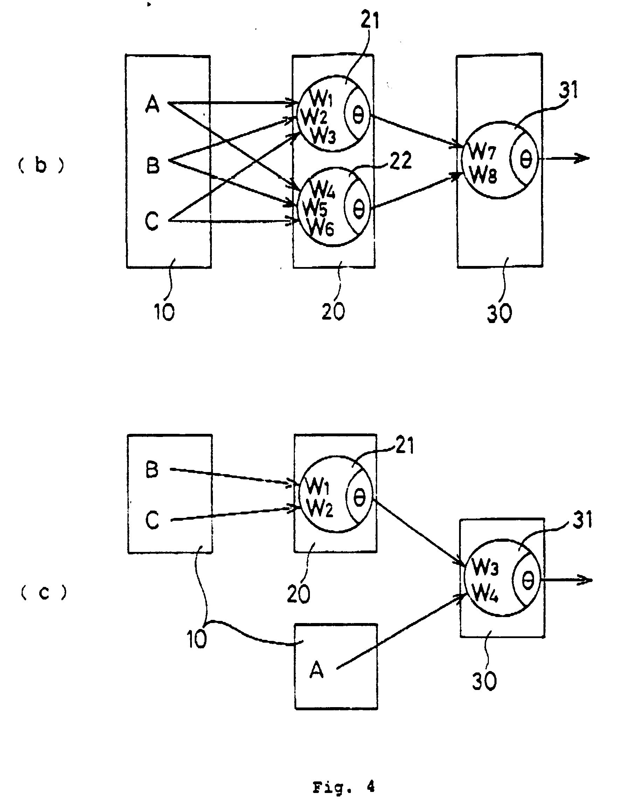

Fig. 4 (a), (b) and (c) show a data processing system which performs the logic computation of (10).

$$Ax(B + C) \quad (10)$$

Fig. 4 (a) shows similar construction as described in PRIOR ART. The eight neurons from 21 to 28 are settled in the first neural layer 20. The number is same as the number of combinations of A, B and C in the data group 10, that is, $2^3$.

A neuron 31 computes OR (logic sum) of the outputs from 21 to 28 of the first neural layer 20. The neuron 30 is settled in the second neural layer 30. A data "000" is generated as bit patterns by neurons A, B and C. These neurons output "1" when bit patterns shown for each neuron are inputted.

In the present data processing system, the number of neurons is 9 and number of synapses is 32: neurons and synapses work inefficiently and necessary capacity of memory is big. Lots of processing time is necessary, as well.

Fig. 4 (b) corresponds an expanded formula (11) of formula (10) for simplifying the computation.

$$AxB + AxC \quad (11)$$

The first neural layer 20 comprises neuron 21 for processing the computation of AxB and neuron 22 for processing the computation of AxC. The second neural layer 30 comprises neuron 31 for calculating OR of outputs of neurons 21 and 22.

In neuron 21, weights from W1 to W3 corresponding to data A, B and C, respectively, are settled W1=1, W2=1 and W3=0 so that output is "1" when formula (12) is satisfied.

$$AW1 + BW2 + CW3 >= 2 \quad (12)$$

Threshold θ=2 in this case. Here, W4=1, W5=0, W6=1 and θ=2 in neuron 22, and W7=1, W8=1 and θ=1 in neuron 31.

In the data processing system in Fig. 4 (b), the number of neurons is 3 and that of synapses is 8. The neurons and synapses work more efficiently than the data processing system in Fig. 4 (a). They work efficiently furthermore by using the system of the present invention, shown in Fig. 4 (c)

Fig. 4 (c) shows the fourth embodiment comprising the first neural layer 20 and the second neural layer 30. Data B and C are inputted to the first neural layer 20. Data A is directly inputted to the second neural layer 30. A neuron 21 for computing (B+C) is settled in the first neural layer 20. A neuron 31 for computing Ax(B+C) is settled in the second neural layer 30. Neuron 21 outputs "1" for example when W1=1, W2=1, θ=1 and formula (13) is satisifed.

$$BW1 + CW2 > = 1 \quad (13)$$

Neuron 31 outputs "1" for example when W3=1, W4=1, θ=2 and formula (14) is satisfied, where Y1 is the output of neuron 21.

$$Y1W3 + AW4 > = 2 \quad (14)$$

The number of neurons is 2 and that of synapse is 4. It means that the neurons and synapses work more efficiently than those in Fig. 4 (b).

Basic idea of the present invention is described below.

As for formula (10), data B and C are combined together by an operator "+ (OR)". The computation result and data A are combined together by an operator "x (AND)". Essentially (data B and C) and (data A) should not be evaluated on the same level. If it is dare to be carried out, the performance becomes inefficient as in Fig. 4 (a) and (b).

The degree of data B and C are the same and that of data A is higher by one degree than they in formula (10). Here, the abstraction degree of data A is "1" when those of data B and C are "0".

Considering the relationship between the abstraction degrees of the data and the abstraction degree of the neural layers, only 0-abstraction degree data is inputted in neural layer 20 and only 1-abstraction degree data is inputted in neural layer 30 in Fig.4 (c). Therefore, it is clear that neural layer 20 and 30 may be related to the abstraction degrees of input data. Hereinafter, a layer has the same abstraction degree as that of input data thereof.

Neurons and synapses work most profitably and efficiently by classifying data to be inputted to each layer into groups according to the abstraction degree of data and by inputting the data of each abstraction degree into the corresponding neural layer.

It is also possible to process data by a layer with lower abstraction degree than the abstraction degree of the data. However, neurons and synapses work inefficiently in this case. Accordingly, the abstraction degree of each data should be defined as higher as the data can take.

The same data might be used with different abstraction degrees, in a formula (A+B)xB etc. The same data may be inputted to one or more neural layers.

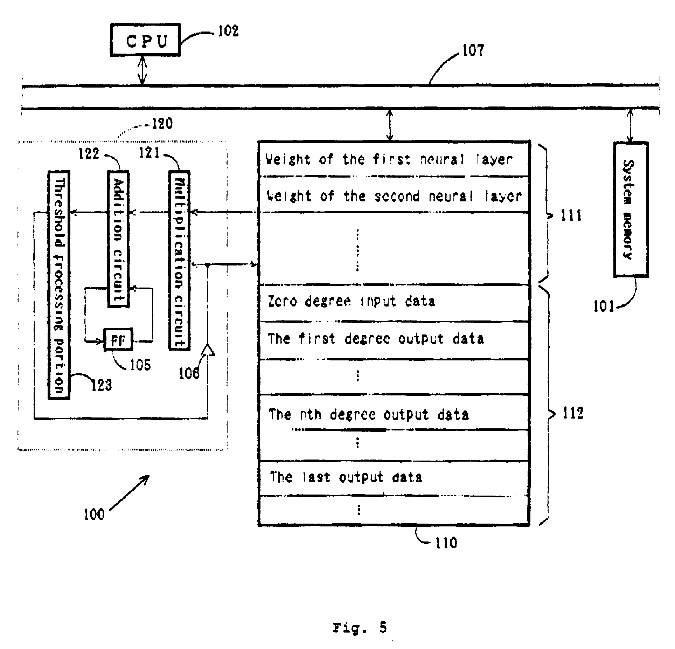

An embodiment of a computer portion for the data processing system according to the present invention is described, hereinafter. Fig. 5 shows computer portion 100 connected to an image processing system described in the United States Patent Application No. 07/141534, for example. Computer portion 100 processes data transmitted directly or through system bus 107 from the image processing system above. The process result is outputted to data memory 110 as the final output data.

Computer portion 100 comprises an output data generating portion 120 which performs association of neural network. The computation of linear-threshold-function of each neuron is performed in output data generating portion 120. Each portion in output data generating portion 120 is controlled by CPU 102.

As mentioned above, linear-threshold-function is the type of the formula (9). The multiplication of WiAi is executed in multiplication circuit 121 in output data generating portion 120. Each computation result of WiAi is inputted to accumulation circuit 122, successively, and ΣWiAi is performed.

Accumulation circuit 122 consists of an addition circuit 104 and flip-flop 105 which is connected to the circuit 104 for constructing a feed-back line of the circuit 104. Once an addition result is held in flip-flop 105, accumulation is performed by adding the next input of W1A1 to the addition result held. The computation result of ΣWiAi is inputted to threshold processing portion 123, which performs a computation (Σ WiAi-θ). Normalizing of the computation result of ( ΣWiAi-θ) and others are performed in the portion 123. And the final data is outputted from the portion 123 through a buffer 106 to the memory 110. Multiplication circuit 121 has two input lines for parallelly inputting weight data, and input or output data. Buffer 106 is connected to one of the input lines, which used as bi-directional line for inputting as well as outputting. Buffer 106 has high impedance when data is transmitted from data memory 110 to multiplication circuit 121.

For the first neural layer, input data of abstraction degree of "0" as well as weights therefor are given. For the second neural layer, input data of degree of "1" and weights therefor. The output of the nth neural layer, that is nth output data, becomes the input of the (n+1)th neural layer. In data memory 110, weight data are stored in synapse weight area 111 and input and output data are stored in input and output data area 112. The threshold of each neuron to be settled in the threshold processing portion 123 is stored in data memory 110 or system memory 101 and transmitted to threshold processing portion 123 before beginning the computation of each neuron.

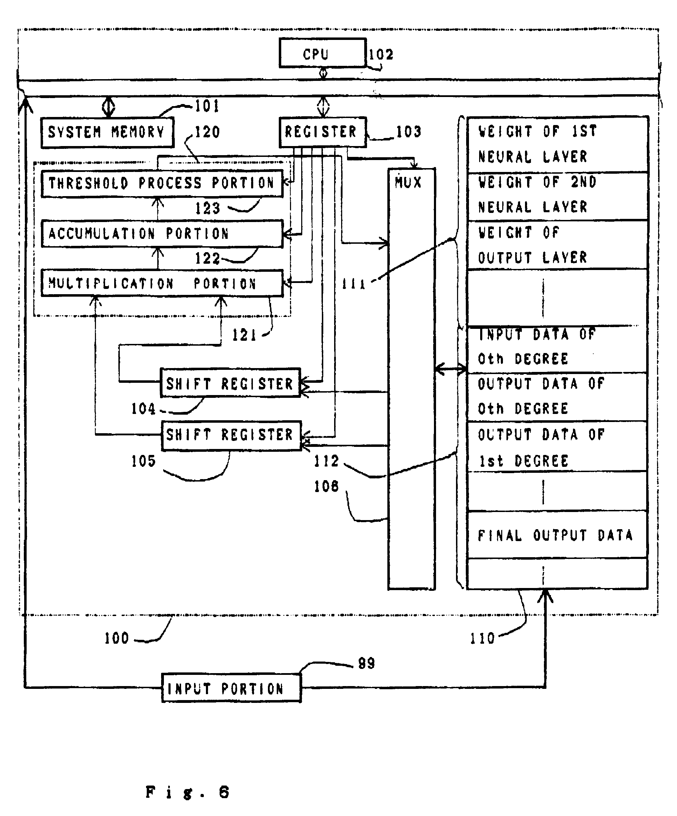

Fig. 6 shows another computer portion 100. Same references as portions in Fig. 5 are given to corresponding portions in Fig. 5. Computing portion 100 comprises central processing unit (CPU) 102, control data memory 110, output data generating portion 120, register 103, shift register 104, shift register 105 and multiplexer 106 and system memory 101. CPU 102, system memory 101, control data memory 110 and register 103 are connected to bus 107. Input system 99 is connected to control data memory 110 as well to bus 107.

Control data memory 110 consists of synapse weight area 111 and input-and-output data area 112.

Fig. 5 shows an example with two neural layers except for output layer (Fig. 3 (b) is the same case.).

Input-and-output data area 112 is the area to store:

zero-degree input data to be inputted in the first neural layer,

zero-degree output data to be outputted from the first neural layer,

the first input data to be inputted to the second neural layer,

the first output data to be outputted from the second neural layer, and

the last output data to be outputted from the output layer.

Output data generating portion 120 comprises multiplication circuit 121, addition circuit 122 and threshold processing circuit 123. These circuit is controlled by register 103.

Multiplication circuit 121, to which input data DIn and synapse weight data W are inputted, calculates the multiplication thereof. Input data DI is stored in shift register 105 through controlling data memory 110 and MUX 106. It is inputted to multiplication circuit 121 with a predetermined timing. Synapse weight data W is given from control data memory 110 through MUX 106 to shift register 104 to be stored therein. It is inputted to multiplication circuit 121 in a predetermined timing.

The multiplication result of DIn x W is inputted to accumulation circuit 122 from multiplication circuit 121 for each input data DIn. Accumulation circuit 122 accumulates the multiplication results. It means that the following computation result is stored on a synapse.

$$\Sigma(DIi \times Wi) \quad (15)$$

When the sum of input data and multiplication result of weight is calculated for one synapse, the sum is inputted to threshold processing circuit 123. Threshold processing circuit stores the data of threshold $\theta$ corresponding to each neuron in a form of a table, for example. Threshold processing circuit 123 compares the sum of data and threshold $\theta$ according to formula (16), and outputs output data DO.

$$DO = f\{\Sigma(DIi \times Wi) - \theta\} \quad (16)$$

In the formula (16), f is defined as binarizing function, for instance. Output data Do becomes "1" when the value subtracted by threshold $\theta$ from the sum is equal to or more than 0, and it becomes "0" when the value is less than "0".

The output data DO is transmitted through MUX 106 to input-and-output layer area 112 in control data memory 110 to be stored therein.

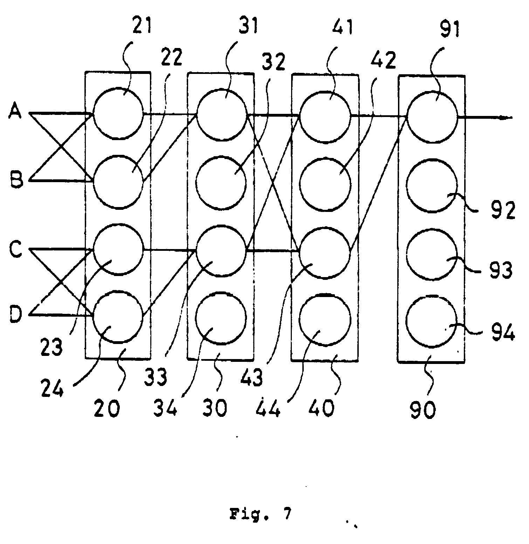

Fig. 7 shows the fifth embodiment of the present invention. It shows the case that input data A, B, C and D are processed according to the logic computation of

$$(A\oplus B)\oplus(C\oplus D) \quad (17)$$

through learning. Where, A, B, C and D are the digital values of "1" or "0", and the result of logic computation is outputted as the digital value of "1" or "0", also.

This embodiment comprises 4 neural layers of 20, 30, 40 and 90. The last neural layer 90 is the output layer to output the last output data. The first neural layer 20 comprises 4 neurons of 21, 22, 23 and 24: the second neural layer 30 comprises 4 neurons of 31, 32, 33 and 34; the third neural layer 40 comprises 4 neurons of 41, 42, 43 and 44; the output layer 90 comprises 4 neurons of 91, 92, 93 and 94. Each data from A to D are inputted to each neuron in the first neural layer 20. Each neuron is connected to each neuron in the neighbor neural layer. The lines which do not perform substantially are omitted in the figure.

Each neuron has weight Wi by which inputted data is multiplied, and threshold $\theta$. Neuron outputs an output data "1" when the sum of multiplication is equal to or more than the threshold $\theta$; it outputs the output data "0" when the sum is less than the threshold $\theta$, according to the formula (9) above.

For a logic computation (A⊕B), being expanded as (AB+AB), neuron 21 processed (AB) and neuron 22 processes (AB) in neural layer 20. For a logic computation (C⊕D), being expanded as (CD+CD), neuron 23 processes (CD and neuron 24 processes (CD).

Neuron 21 outputs an output data "1" when the formula below is satisfied.

$$AW21 + BW22 + CW23 + DW24 = 1 \quad (18)$$

where, W21=-1, W22=1, W23=0, W24=0 and $\theta$=1.

Neuron 22 outputs an output data "1" when the formula below is satisfied.

$$AW25 + BW26 + CW27 + DW28 = 1 \quad (19)$$

where, W25=1, W26=-1, W27=0, W28=0 and $\theta$=1.

The weights Wis of neurons 23 and 24 and threshold $\theta$s are settled, similarly to the above.

Neuron 31 in neural layer 30 processes (AB+ab), which outputs the output data "1" when the formula below is satisfied.

$$KW31 + LW32 + MW33 + NW34 = 1 \quad (20)$$

where, W31=1, W32=1, W33=0, W34=0, $\theta$=1, the output of neuron 21, 22, 23 and 24 is K, L, M and N respectively.

Similar to the above, neuron 33 processes (CD+CD), which outputs "1" when at least one of outputs of neurons 23 and 24 is "1". The weight Wis of neurons 32 and 34 are settled 0 and do not work substantially.

Accordingly, neuron 31 outputs the result of (A⊕B) and neuron 33 outputs the result of (C⊕D).

Here, the outputs of neuron 31, 32, 33 and 34 are defined as E, F, G, and H, respectively. Neuron 41 in neural layer 40 processes (EG) and neuron 43 processed (EG). Neuron 41 outputs an output data "1" when the formula below is satisfied.

$$EW41 + FW42 + GW43 + HW44 = 1 \quad (21)$$

where, $W41=-1$, $W42=0$, $W43=1$, $W44=0$ and $\theta=1$.

Likewise, neuron 43 outputs an output data "1" when the formula below is satisfied.

$$EW45 + FW46 + GW47 + HW48 = 1 \quad (22)$$

where, $W45=1$, $W46=0$, $W47=-1$, $W48=0$ and $\theta=1$.

Neuron 42 and 44, whose weights Wis and settled 0, do not work substantially.

Neuron 91 in the output layer 90 process (EG+EG) and outputs an output data "1" when the formula below is satisfied.

$$PW91 + QW92 + RW93 + SW94 = 1 \quad (23)$$

where, $W91=1$, $W92=0$, $W93=1$, $W94=0$, $\theta=1$, the outputs of neurons 41, 42, 43 and 44 are P, Q, R and S respectively.

Neurons 92, 93 and 94 do not work substantially. In this way, the neurons which do not work substantially can be omitted when an objective usage is limited and the number of output data is clarified.

From the mention above, neuron 91 outputs the result of $(E \oplus G)$, that is the result of $(A \oplus B)+(C \oplus D)$.

The degree of output data of the logic computations $(A \oplus B)$ and $(C \oplus D)$ are "2", because the operator "$\oplus$(EX-OR)" is substituted by two operators of "AND" and "OR". Therefore, the degree of output data is 4 in the logic computation $(A \oplus B) \oplus (C \oplus D)$; this logic computation is processed through 4 neural layers which have as many neurons as the number of input data, that is 4.

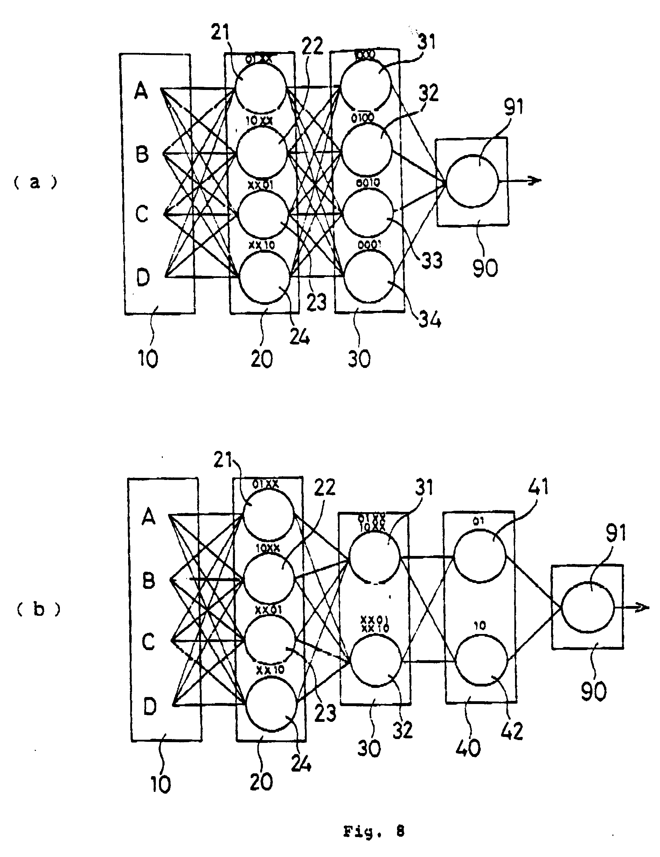

Fig. 8 (a) and (b) show the sixth embodiment with a comparative example. These show a cases to process input data according to the computation of

$$(A \oplus B) \oplus (C \oplus D) \quad (24)$$

where, $\oplus$ shows "exclusive or";

A, B, C and D are the digital values of "1" or "0";

the results of this logical computation are outputted as digital values of "1" or "0".

Fig. 8 (a) shows a comparative example, comprising a data group 10 from which input data is outputted, the first neural layer 20, the second neural layer 30 and output layer 90. Input data group 10 includes input data A, B, C and D. The first neural layer 20 comprises four neurons 21, 22, 23 and 24. The second neural layer 30 comprises four neurons 31, 32, 33 and 34. Data from A to D are inputted to each neuron in the first neural layer 20, which is connected to each neuron in neural layer 30. Output layer 90 comprises a neuron 91, to which each neuron in the second neural layer 20 is connected.

Neuron 21 in the first neural layer 20 has weights and threshold for the linear-threshold-function. It outputs an output data "1" when the sum of multiplication of each input data by the weight is equal to or exceeds threshold, and outputs "0" when the sum is smaller than the threshold. In the same way, neurons 22, 23 and 24 output "1" or "0" in response to the input data. Each neuron in the second neural layer 30 outputs "1" or "0" in the same way as the first neural layer 20.

Neuron 91 in output layer 90 outputs "1" or "0" according to the output data from the second neural layer 30 in the same way.

The result of logical computation $(A \oplus B) \oplus (C \oplus D)$ is "1" when data A does not coincide with B, and C coincides with D; or when A coincides with B and C does not coincide with D. Otherwise, it becomes "0". Each neuron in Fig. 8 (a) is constructed as follows.

Neuron 21, 22, 23 and 24 in the first neural layer 20 output "1" when A, B, C and D are 4 bits patterns of "01xx", "10xx", "xx01" and "xx10", respectively. They output "0" for other inputs.

Neuron 31 in the second neural layer 30 outputs "1" when only neuron 21 in the first neural layer 20 outputs "1". Otherwise, it outputs "0". Neuron 32 outputs "1" when only neuron 21 in the first neural layer 20 outputs "1". Otherwise, it outputs "0". Neuron 33 outputs "1" when only neuron 23 in the first neural layer 20 outputs "1". Neuron 34 outputs "1" when only neuron 24 in the first neural layer 20 outputs "1".

On the other hand, neuron 91 in output layer 90 outputs "1" when at least one neuron in the second neural layer 30 output(s) "1".

When the input data of A, B, C and D are "0001" as bit pattern, only neuron 23 in the first neural layer 20 outputs "1" and other neurons of 21, 22 and 24 output "0". Consequently, neuron 33 in the second neural layer outputs "1" and neuron 91 in output layer 90 outputs "1". Similarly, when a bit pattern consisting of A, B, C and D are "0010", "0100", "1000", "1110", "1101", "1011" or "0111", one of neurons in the second neural layer outputs "1" and neuron 91 in output layer 90 output "1".

Fig. 8 (b) shows the sixth embodiment of the present invention, comprising input data group 10, the first neural layer 20, the second neural layer 30, the third neural layer 40 and output layer 90. Input data group 10 consists of input data A, B, C and D. The first neural layer 20 comprises four neurons of 21, 22, 23 and 24. The second neural layer 30 comprises two neurons 31 and 32. The third neural layer 40 comprises two neurons 41 and 42. Output layer 90 comprises a neuron 91. Data from A to D in input data group are inputted to the neurons in the first neural layer 20, which are connected to the neurons in the second neural layer 30. Neurons in the second neural layer 30 are connected to the neurons in the third neural layer 40, which are connected to the neuron in output layer 90.

All neurons in neural layers 20, 30, 40 and in output layer 90 output "1" or "0" according to inputted data, similarly to the case in Fig. 8 (a).

Neurons 21, 22, 23 and 24 in the first neural layer 20 output "1" when 4 bits pattern of A, B, C and D are "01xx", "10xx", "xx01" or "xx10" is outputted, respectively. Otherwise, they output "0". Neuron 31 in the second neural layer 30 outputs "1" when a neuron 21 or 22 in the first neural layer 20 outputs "1". Otherwise, it outputs "0". Neuron 32 outputs "1" when neuron 23 or 24 in the first neural layer 20 outputs "1". Otherwise, it outputs "0". Neuron 41 in the third neural layer 40 outputs "1" when only neuron 32 in the second neural layer 20 outputs "1". Otherwise, it outputs "0". Neuron 42 outputs "1" when only neuron 31 in the second neural layer 20 outputs "1". Otherwise, it outputs "0". Neuron 91 in output layer 90 outputs "1" when at least one neuron in the third neural layer 40 output(s) "1".

When input data of A, B, C and D is a bit pattern of "0001", only neuron 23 in the first neural layer 20 outputs "1" and other neurons 21, 22 and 24 output "0". Consequently, only neuron 32 in the second neural layer 30 outputs "1" and neuron 42 in the third neural layer 40 outputs "1". Accordingly neuron 91 in output layer 90 outputs "1". In the same way, when a bit pattern of A, B, C and D is "0010", "0100", "1000", "1110", "1101", "1011" or "0111", one of neurons in the second neural layer 30 outputs "1". Consequently, one neuron in the third neural layer 40 outputs "1", thereby one neuron in the fourth neural layer 40 outputs "1". Therefore, neuron 91 in output layer 90 outputs "1".

As easily understood in Fig. 8 (a) of comparative example, the number of synapses is 36 and the number of neurons is 10. In the embodiment in Fig. 8 (b), the number of synapses is 30 and the number of neurons is 10. When inputted data is processed by logical computation of $(A \oplus B) \oplus (C \oplus D)$, 36 synapses are necessary in the comparative example; on the other hand, only 30 synapses are necessary in the present embodiment.

The number of synapses decreases about 20% by the present embodiment. Each embodiment above has similar advantages. That is, the number of synapses and the capacity of memory is decreased and the speed of computation become higher by increasing number of neural layers and by settling number of neurons in a neural layer less than the number of neurons in the previous neural layer.

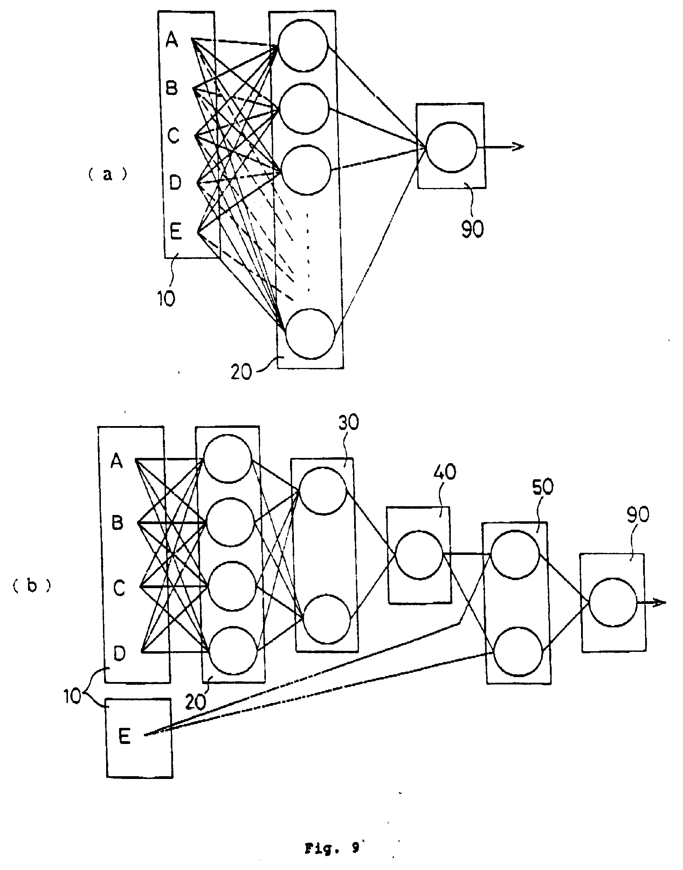

Fig. 9 (a) and (b) show the seventh embodiment with comparative example. This example shows a case that input data is processed by the formula (25).

$$\{(A \oplus B) \oplus (C \oplus D)\} \oplus E \quad (25)$$

Fig. 9 (a) shows the comparative example. Input data group 10 comprises five data from A to E, the first layer 20 comprises 15 neurons and output layer 90 comprises one neuron. In the comparative example, each term of expanded formula of the formula (25) is inputted to each neuron in neural layer 20. All the data is processed as zero abstraction degree data.

Fig. 9 (b) shows the seventh embodiment of the present invention, which comprises input data 10, the first neural layer 20, the second neural layer 30, the third neural layer 40, the fourth neural layer 50 and output layer 90. The first neural layer 20 and the second neural layer 30 performs the processings according to $(A \oplus B)$ and $(C \oplus D)$. The third neural layer 40 performs the processings according to $\{(A \oplus B) \oplus (C \oplus D)\}$. The final result is computed with $\{(A \oplus B) \oplus (C \oplus D)\} \oplus E$ in the fourth neural layer 50 and output layer 90.

As understood by the comparison between Fig. 8 (a) and (b), the number of synapses and the number of neurons in the comparative example are 80 and 16, respectively: the number of synapses and the number of neurons in the present embodiment are 32 and 10, respectively. The number of synapses decreases into 40% and the number of neurons decreases into 60% approximately. Therefore, the same advantages in the above embodiment can be obtained in the present embodiment.

As grasped from the above explanation, the layer structure comprising input data groups, neural layers and output layer have to be constructed with the most appropriate way corresponding to the abstraction degree necessary for the data processing and the abstraction degree of input data. The input data is inputted to the appropriate layer corresponding to the structure of the layer. "Abstraction degree"s here means the abstraction degree of the data and the processings as stated above.

A data processing system for judging end point of a configuration is shown in Fig. 10 and Fig. 11.

Various manners will exist to judge end point of a configuration. In this case, in 3x3 convolution (Fig. 10 (a)), the center pixel (pixel E in Fig. 10 (a)) is an end point when one of patterns from (b)(i) to (viii) is generated. When one of pixels except for the center pixel, among A to D and F to I, is the density of a configuration (for example "1"), and the center pixel E is the density of a configuration, the center pixel is the "end point". Otherwise, it is not "end point".

The data processing system for such judgment is constructed as shown in Fig. 11, for example, which shows the seventh embodiment of the present invention. This data processing system comprises the first neural layer 20 which has 9 neurons from 21 to 29, the second neural layer 30 which has 9 neurons from 31 to 39 and the output layer 90 which has 9 neurons from 91 to 99. The pixel data from A to I are inputted to the first neural layer 20.

Neuron 21 in the first neural layer 20 outputs an output data "1" when only pixel A is "1" in the pixel A to I except the pixel E. Similarly, neurons 22, 23, 24, 25, 26, 27 and 28 output an output data "1" when only pixel B, C, D, F, G, H and I are "1", respectively. Therefore, when one of pixels from A to D and F to I is "1", one of neurons from 21 to 28 outputs an output data "1". On the other hand, neuron 29 outputs the data of pixel E.

Neuron 31 in the second neural layer 30 outputs an output data "1" when the outputs of neurons 21 and 29 are "1", that is, when pixels A and E are "1". Likewise, neurons from 32 to 38 output an output data "1" when pixels B and E are "1", when pixels C and E are "1", when pixels D and E are "1", when pixels F and E are "1", when pixels G and E are "1", when pixels H and E are "1" and when pixels I and E are "1", respectively. Neuron 39 does not concern the judgment of the end point, substantially.

Neuron 91 in output layer 90 outputs an output data "1" when at least one of neurons from 31 to 38 in the second neural layer 30 outputs an output data "1", that is when at least one of patterns in Fig. 6 (b) from (i) to (viii) is generated. The center pixel E is judged as an end point on this occasion. Neurons from 92 to 99 do not concern the judgment of the end points, substantially.

When the pixel data from A to I are defined as zero degree data, the output of neuron 91 is the third degree data and three steps of logic computations are constructed for judging end points. The computation is as follows. In neural layer 20, logical multiplication is performed for judging if only one of pixels in A to D and F to I is "1" or not, for example (ABCDFGHI) in neuron 21. In neural layer 30, performed logical multiplication is performed for judging if only one of pixels in A to D and F to I is "1" and E is "1" or not, for example (ABCDFGHI·E) in neuron 31. In neural layer 90, logical sum is defined for judging if E is "1" and one of pixels in A to D and F to I is "1".

The judgment of end points can be performed by a logical sum for judging if E is "1" and one of pixels in A to D and F to I is "1" in neural layer 30. Therefore, it is possible to judge end points through 2 neural layers. When the difference of abstraction degrees between output data and input data is 3, the judgment of end point is executed by settling at most 3 neural layers, without fail.

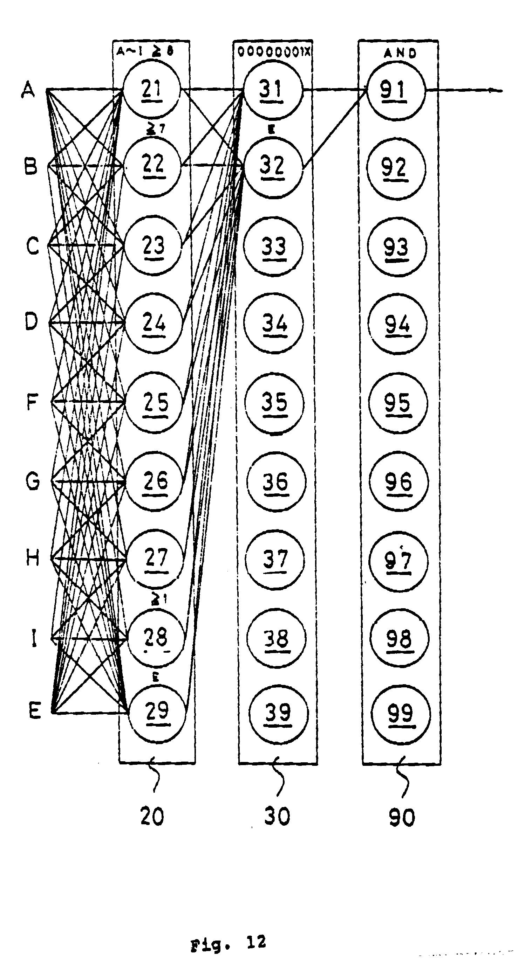

Fig. 12 shows the eighth embodiment of the present invention. The present data processing system comprises the first neural layer 20 which has 9 neurons from 21 to 29, the second neural layer 30 which has 9 neurons from 31 to 39 and the output layer 90 which has 9 neurons from 91 to 99. The data of pixels from A to I are inputted to the first neural layer 20.

Neuron 21 in the first neural layer 20 outputs an output data "1" when 8 or more pixels from A to D and F to I are "1". Neuron 22 outputs an output data "1" when 7 or more pixels from A to D and F to I are "1". In the same way, neuron 23, 24, 25, 26, 27 and 28 output an output data "1" when 6 or more, 5 or more, 4 or more, 3 or more, 2 or more and 1 or more pixels from A to D and F to I are "1", respectively. Neuron 29 outputs the data of pixels E.

Neuron 31 in the second neural layer 30 outputs an output data "1" when only neuron 28 in neurons 21 to 28 in neural layer 20 outputs "1". That is, neuron 31 output the output data "1" when only one pixel in pixels from A to D and F to I is "1". Neuron 32 outputs the data of pixel E as it is. Neurons from 33 to 39 do not concern the judgment of the end points , substantially.

Neuron 91 in output layer 90 performs logical multiplication to if both of neurons 31 and 32 output "1" or not. It outputs an output data "1" when only one pixel in A to D and F to I is "1" and E is "1". Neurons from 92 to 99 do not concern the judgment of the end points, substantially.

The end point data is judged through 3 neural layers in this embodiment.

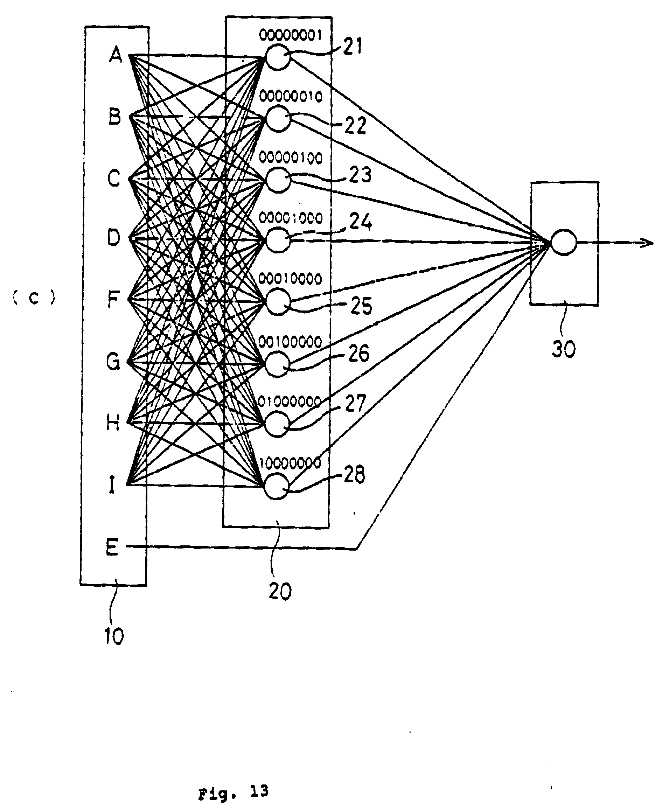

The data processing system for this judgment is constructed as Fig. 13, which shows the ninth embodiment of the present invention. This data processing system comprises the first neural layer 20 consisting of 8 neurons 21 to 28, and the second neural layer 30 consisting of a neuron 31. The data of the pixels A to D and F to I are inputted to the first neural layer 20. The data of pixel E is inputted to neural layer 30.

Neurons 21 to 28 in the first neural layer judge if the pixel of a configuration is "1" in only A, only B or only C. Neuron 31 in the second neural layer 30 outputs "1" when one of the neurons from 21 to 28 outputs "1" and E is the pixel of a configuration "1".

The output data of neuron 31 becomes the second abstraction degree data when the data of each pixel, in the previous pixels of E and the following pixels E in the scan line order, are defined as the zero degree data. Therefore, when input system to data processing system becomes the image processing system, and each data and various characteristics values are the input data, end point data may be recognized as the second abstraction degree data in the case that each pixel data is defined as the zero abstraction degree data. Various data is outputted from an image processing system, such as the number of groups, the number of halls, Euler number, the characteristics value, and so on. Considering the abstraction degrees of these data, they are inputted directly to the most appropriate neural layer.

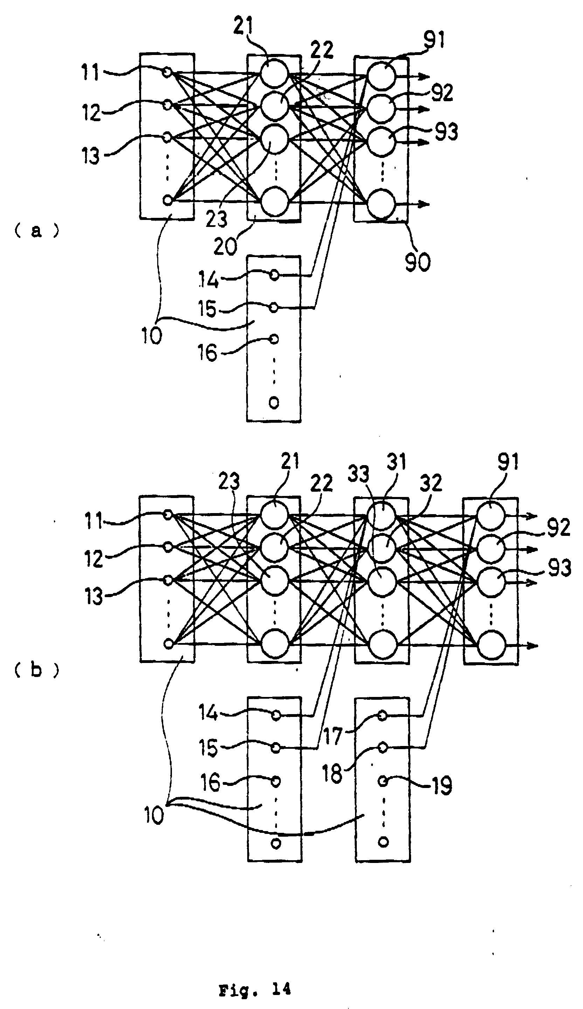

Fig. 14 (a) shows the tenth embodiment of the present invention. The data processing system in this embodiment comprises data group 10, neural layer 20 and 90. Neural layer 90 is an output layer to output an output data outside of data processing system.

Data group 10 comprises data 11, 12, 13... in the first group and data 14, 15, 16... in the second group. The data in data group 10 is classified into two groups of the first and second, according to the abstraction degrees thereof.

Neural layer 20 comprises neurons 21, 22, 23.... Output layer 90 comprises neurons 91, 92, 93.... Each neuron in neural layer 20 is connected to each neuron of output layer 90. Data 11, 12, 13... in the first group are inputted to each neuron in neural layer 20. Data 14, 15, 16... in the second group are inputted to each neuron in output layer 90.

Each neuron in neural layer 20 compares the sum of each inputted data multiplied by weights with threshold so as to output an output data "1" or "0" according to the comparison result as shown in the formula (9), for example. Each neuron in output layer 90 calculates the sum of outputs from neurons in neural layer 20 and the data 14, 15, 16... in the second group, both of which are multiplied by weights. It outputs a data "1" or "0" according to the comparison result between the sum and threshold in the same way of the neurons in neural layer 20.

Data 11, 12, 13... in the first group is, zero-degree data indicating if a pixel is "1" (black, for instance) or "0" (white, for instance) when the present system is applied to an image processing system. Data 14, 15, 16... in the second group is the data of higher abstraction degree indicating characteristics of an image.

In the tenth embodiment, the data in the first group --- that is the data of lower abstraction degree, is inputted to the neurons in neural layer 20. The data in the second group, that is the data of higher abstraction degree, is inputted to the neurons in output layer 90. Accordingly, the neurons in neural layer 20 perform lower processing, that is the processing on the data of a pixel itself. The neurons in output layer 90 perform processing of higher abstraction degree, that is the processing on various characteristics of a pixel.

In the tenth embodiment, the number of the synapses, that is, the connection between input elements and neurons or between neurons decreased, and the number of neurons also decreases. That is why the data of higher abstraction degree is inputted directly to output layer 90, and is not inputted to neural layer 20. When the number of synapses decreases, the memory needs small capacity because the number of computation of neuron decreases, the computation speed becomes higher and the number of weight data decreases, too. When the number of neuron decreases, the number of threshold decreases and the number of computation decreases as well as the memory capacity becomes small: consequently, the computation speed becomes higher. It is possible to process by a memory with small capacity at high speed, in the present embodiment. An efficient data processing system with simple circuit is derived from it.

Fig. 14 (b) shows the eleventh embodiment of the present invention. The data processing system in the embodiment comprises three input data groups 10, neural layer 20, 30 and output layer 90.

Input data group 10 comprises 11, 12, 13... in the first group, 14, 15, 16... in the second group and 17, 18, 19 in the third group. Input data groups are classified into three kinds, different from the third embodiment. The first neural layer 20 comprises neurons 21, 22, 23... and the second neural layer 30 comprises neurons 31, 32, 33.... Output layer 90 comprises neuron 91, 92, 93.... Each neuron in the first neural layer 20 is respectively connected to each neuron in the second neural layer 30, which is respectively connected to each neuron in output layer 90.

The data 11, 12, 13... are respectively connected to each neuron in the first neural layer 20. The data 14, 15, 16... are respectively connected to each neuron in the second neural layer 30. The data 17, 18, 19... are respectively connected to each neuron in output layer 90.

Each neuron outputs an output data "1" or "0" in response to each inputted data according to the formula (9).

The data 11, 12, 13... in the first group are the zero abstraction degree data. The data 14, 15, 16... in the second group are the first abstraction degree data. The data 17, 18, 19... in the third group are the second abstraction degree data. The data of rather high abstraction degree is inputted to the second neural layer 30 and the data of further higher abstraction degree is inputted to the output layer 90.

The numbers of synapses and neurons decrease in the third embodiment in the same way of the third embodiment. Therefore, the same advantages in the second embodiment is obtained.

In the embodiment above, the abstraction degree of data is the number of processings executed to the data: each processing is executed in each neural layer. For instance, since pixel data is zero abstraction degree, end points data is the third degree and the difference between these abstraction degrees is 3, at least the expected object is accomplished by settling 3 neural layers. The example of processings are "AND", "OR", "NAND" and "NOR" of logical computation element: "EX-OR", "EX-NOR" and so on have to be transformed to "AND" or "OR". Because "EX-OR" and so on cannot be processed by one neural layer.

Weights have to be settled as a suitable value through learning of neurons for performing the above processes. Therefore, in the present embodiment, the weights are changed along time so as to follow exponential function, as described later. There are three methods classified roughly as described in the United State Patent 07/295,763. They are called here Mode I, Mode II and Mode III.

In Mode I, the weights of neurons are corrected according to the outputs of the neurons. This method for correction is effective when the objective value of the outputs of each layer is clear. When a neuron generates an output corresponding to an input and when the output is coincident with or near objective value, the relationship between the input and output is to be reinforced. This is equivalent to the weight enhancement of the synapse inputted significant inputs. On Mode I, since the objective value of the output of each neuron is clear, the output of each neuron and the objective value can be compared with each other. When both of them coincide each other or near enough, on the binary input, for example, the weight of the synapse inputted "1" is enhanced.

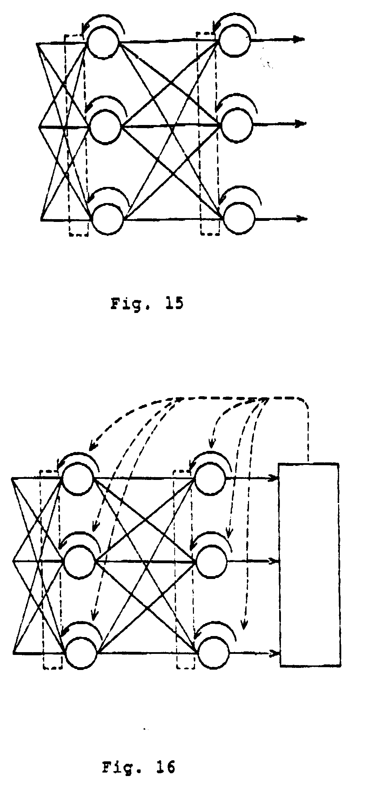

Mode II is shown in Fig. 15. The weight of neuron is corrected according to the last output evaluation. The method for correction is effective on the case for judging the processings of the data processing system with the wide view. Hamming distance between the last output of the output layer and the objective value, evaluation of Pythagorean distance and sensitized evaluation are effective for evaluation of the Mode II. When the output is coincident with or near enough to the objective value on the evaluation, the relationship between the input and output have to be reinforced. At that time, the weight of each synapse inputted "1", for example, is increased.

Mode III is the method to correct weight on the case of learning of memorizing inputs as it is. The relationship between an input and the output generated first on the input is reinforced. That is, in the structure in Fig. 16, the weight of synapse inputted "1" of the neuron outputted "12 in response to the input is increased.

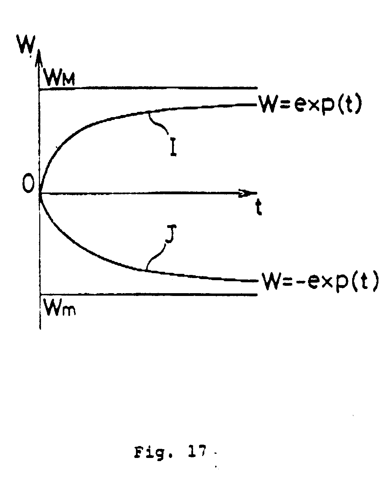

Inventors assume that the weight change of a neuron is the change of electrical potential of membrane of neural cell of an organism. It seems that the learning in data processing system becomes efficient when the weight is settled similarly to the electrical potential of membrane of neural cell of an organism. It also seems that the weight is expressed with exponential function, similarly to well-known RLC circuit, when the weight change in the same way of electrical potential of membrane. The weight W is expressed by the formula (9) as shown in Fig. 17.

$$W = + - \exp(t) \quad (9)$$

where, t is the learning time of each neuron, that is, the times of learning.

In the formula (9), when a synapse is stimulated, the mark is +. As shown with the solid line I, weight W starting from 0, becomes larger rapidly at first. Next, as time passes from the start of learning, the smaller the change of weight becomes and converges the maximum $W_M$. On the other hand, when a synapse is inhibited, the mark is -. As shown with the solid line J, weight W starting from 0, becomes smaller rapidly at first. Next, as time passes from the start of learning, the smaller the change of weight becomes and converges the minimum Wm.

Since there is a little data correlation of the synapse just after starting learning, the weight W is settle small. Since the data correlation becomes closer after that, weight W become bigger promptly: consequently the convergence by learning is expedited. When weight W is big already after learning, the synapse has strong data correlation sufficiently until the learning then. If the weight is changed frequently, the convergence by learning is blocked because of vibrations. Here, as weight W is settled to change little, enough convergence is performed.

Conventionally, there have been stimulated neuron and inhibited neuron for the characteristics of neuron's outputs. It has been necessary to investigate detailedly considering the processings to settle them adequately in a data processing system. That is, it has been complicated to combinate inhibited neuron and stimulated one in a data processing system. The present embodiment makes it possible to realize both of synapses of inhibited or stimulated only by selecting the sign of weight W of a synapse's characteristics. Accordingly, the circuit has more simple structure and higher flexibility. Data separation is improved by the existence of an inhibited neuron, as mentioned by Rosenblatt. ("The Perceptron: a probabilistic model for information storage and organization in the brain", Psychological Review 65, pp386-408, Rosenblatt, 1958).

The efficiency of learning in data processing system improves by the present embodiment and therefore, the last output data is converged and stabilized quickly. As mentioned above, the characteristics of neurons inhibited or stimulated is obtained only by changing the sign of plus or minus of a weight W. Accordingly, the data processing system obtains flexibility in circuit.

The change according to time passing of weight W is not necessary to be settled on explanatory function. It may be expressed by polygonal line approximately.

The processings are not only what expressed by logical computation elements, but also what settled according to the characteristics of output data.

As mentioned above, the data processing system for executing the expected processing can be constructed certainly.

As mentioned above, the number of synapses or neurons necessary to a certain processing can be decreased by the present invention. Accordingly, it is possible to decrease the memory capacity of data processing system and to improve the processing speed. A similar learning of neurons as that of organisms can be realized and efficiency of learning can be progressed in a data processing system by changing the weight as time passes.

## Claims

1. A data processing system processing input data into output data, said output data having a higher abstraction degree than the input data, said data processing system comprising a number of neural layers (10,20,30) each of which including several neurons (21,22,23,24,25,26,27,28,31), wherein each said neuron generates an output signal based on a comparison between a weighted sum of input signals and a given threshold value, said number of neural layers being connected in a cascade manner from lower order layers to higher order layers in that a neuron of a layer with a certain order receives as inputs, output signals from layers having a lower order,
**characterized in that**
said number of neural layers is equal to the difference between the abstraction degree of the output and input data, and said abstraction degree is defined as a number of logical computations performed between the input data and output data.

2. A data processing system according to claim 1 further comprising:
a memory for storing at least an input data, weight data, output data and reference data;
a weight variable determining means for evaluating the relationship between said input data and output data or the relationship among said input data, output data and reference data,
a weight changing means for calculating a variable of said weight data according to an output from said weight variable determining means and said weight data.

3. System according to claim 2, wherein said weight variable determining means calculates a difference between said output data and reference data, as well as multiplies said difference by said input data.

4. System according to claim 2 wherein said weight variable determining means multiplies said output data by said input data.

5. System according to claim 2, wherein said weight changing means adds said output from said weight variable determining means and said weight data.

6. System according to claim 2, wherein said weight changing means multiplies said output from said weight variable determining means by an efficiency according to said weight data, as well as adds said multiplication result and said weight data.

7. System according to claim 6, wherein said efficiency has a characteristic of monotonous decreasing function.

8. System according to claim 6, wherein said efficiency is determined by use of a table.

9. System according to claim 8, wherein said table is rewritable.

10. System according to any of the preceeding claims for comprising:

an output data generating means for multiplying each of said input data and each of said weight data, for integrating said multiplication results and for generating an output data according to a difference between said integration result and a threshold value.

11. System according to claim 10, wherein said difference between said integration result and said threshold value is calculated by use of a table.

**Patentansprüche**

1. Datenverarbeitungssystem zum Verarbeiten von Eingangsdaten in Ausgangsdaten, wobei die Ausgangsdaten einen höheren Abstraktionsgrad aufweisen als die Eingangsdaten, das Datenverarbeitungssystem eine Anzahl von neuronalen Schichten (10, 20, 30) aufweist, von denen jede mehrere Neuronen (21, 22, 23, 24, 25, 26, 27, 28, 29, 30, 31) aufweist, wobei jedes Neuron ein Ausgangssignal, basierend auf einem Vergleich zwischen einer gewichteten Summe von Eingangssignalen und einem gegebenen Schwellwert, erzeugt, wobei die Anzahl der neuronalen Schichten kaskadisch in Reihenfolge von Schichten geringerer Ordnung zu höherer Ordnung verbunden sind, so daß ein Neuron in einer Schicht mit einer bestimmten Ordnung als Eingangssignale Ausgangssignale von Schichten mit geringerer Ordnung erhält,
**dadurch gekennzeichnet,** daß
die Anzahl der neuronalen Schichten gleich der Differenz zwischen dem Abstraktionsgrad der Ausgangs- und Eingangsdaten ist und der Abstraktionsgrad als Anzahl von logischen Berechnungen, die zwischen den Eingangsdaten und Ausgangsdaten ausgeführt werden, definiert ist.

2. Datenverarbeitungssystem nach Anspruch 1, weiterhin aufweisend:
einen Speicher zum Speichern von zumindest Eingangsdaten, gewichteten Daten, Ausgangsdaten und Referenzdaten;
eine Gewichtsvariablenbestimmungseinrichtung zum Abschätzen der Beziehung zwischen Eingangsdaten und Ausgangsdaten oder der Beziehung zwischen Eingangsdaten, Ausgangsdaten und Referenzdaten,
eine Gewichtsveränderungseinrichtung zum Berechnen einer Gewichtsdatenvariablen entsprechend einem Ausgang von der Bestimmungseinrichtung und den gewichteten Daten.

3. System nach Anspruch 2, wobei die Bestimmungseinrichtung eine Differenz zwischen Ausgangsdaten und Referenzdaten berechnet sowie die Differenz mit den Eingangsdaten multipliziert.

4.  System nach Anspruch 2, wobei die Bestimmungseinrichtung die Ausgangsdaten mit den Eingangsdaten multipliziert.

5.  System nach Anspruch 2, wobei die Gewichtsveränderungseinrichtung die Ausgänge von der Bestimmungseinrichtung und die Gewichtsdaten addiert.

6.  System nach Anspruch 2, wobei die Gewichtsveränderungeinrichtung den Ausgang von der Bestimmungseinrichtung mit einer Effizienz gemäß den Gewichtsdaten multipliziert und das Multiplikationsergebnis und die gewichteten Daten addiert.

7.  System nach Anspruch 6, wobei die Effizienz eine Charakteritik gemäß einer monoton abnehmenden Funktion aufweist.

8.  System nach Anspruch 6, wobei die Effizienz unter Verwendung einer Tabelle bestimmt wird.

9.  System nach Anspruch 8, wobei die Tabelle wieder beschreibbar ist.

10. System nach einem der vorhergehenden Ansprüche mit:
    einer Ausgangsdatenerzeugungseinrichtung zum Multiplizieren aller Eingangsdaten mit allen gewichteten Daten zum Integrieren der Multiplikationsergebnisse und zum Erzeugen von Ausgangsdaten gemäß einer Differenz zwischen dem Integrationsergebnis und einem Schwellwert.

11. System nach Anspruch 10, wobei die Differenz zwischen dem Integrationsergebnis und dem Schwellwert unter Verwendung einer Tabelle berechnet wird.

**Revendications**

1.  Système de traitement de données traitant des données d'entrée en données de sortie, lesdites données de sortie ayant un degré d'abstraction supérieur à celui des données d'entrée, ledit système de traitement de données comportant un nombre de couches neuronales (10, 20, 30) comprenant chacune plusieurs neurones (21, 22, 23, 24, 25, 26, 27, 28, 31), dans lequel chacun desdits neurones génère un signal de sortie basé sur une comparaison entre une somme pondérée de signaux d'entrée et une valeur de seuil donnée, ledit nombre de couches neuronales étant connecté en cascade des couches d'ordre inférieur aux couches d'ordre supérieur de telle sorte qu'un neurone d'une couche d'un certain ordre reçoit comme entrées des signaux de sortie de couches d'un ordre inférieur,
    caractérisé en ce que :
    - ledit nombre de couches neuronales est égal à la différence entre les degrés d'abstraction des données de sortie et d'entrée, et ledit degré d'abstraction est défini comme un nombre de calculs logiques effectués entre les données d'entrée et les données de sortie.

2.  Système de traitement de données selon la revendication 1, comportant en outre :
    - une mémoire pour mémoriser au moins une donnée d'entrée, une donnée de poids, une donnée de sortie et une donnée de référence;
    - des moyens de détermination de variable de poids pour évaluer la relation entre ladite donnée d'entrée et ladite donnée de sortie ou la relation entre ladite donnée d'entrée, ladite donnée de sortie et ladite donnée de référence; et
    - des moyens de changement de poids pour calculer une variable de ladite donnée de poids en fonction d'une sortie desdits moyens de détermination de variable de poids et de ladite donnée de poids.

3.  Système selon la revendication 2, dans lequel lesdits moyens de détermination de variable de poids calculent une différence entre ladite donnée de sortie et ladite donnée de référence, et multiplie également ladite différence par ladite donnée d'entrée.

4.  Système selon la revendication 2, dans lequel lesdits moyens de détermination de variable de poids multiplient ladite donnée de sortie par ladite donnée d'entrée.

5.  Système selon la revendication 2, dans lequel lesdits moyens de changement de poids ajoutent ladite sortie desdits moyens de détermination de variable de poids et ladite donnée de poids.

6.  Système selon la revendication 2, dans lequel lesdits moyens de changement de poids multiplient ladite sortie desdits moyens de détermination de variable de poids par un rendement en fonction de ladite donnée de poids, et ajoute également le résultat de ladite multiplication et ladite donnée de poids.

7.  Système selon la revendication 6, dans lequel ledit rendement a la caractéristique d'une fonction uniformément décroissante.

8. Système selon la revendication 6 , dans lequel ledit rendement est déterminé par utilisation d'une table.

9. Système selon la revendication 8 , dans lequel ladite table peut être réécrite.

10. Système selon l'une quelconque des revendications précédentes, comportant :

    - des moyens de génération de donnée de sortie pour multiplier chacune desdites données d'entrée et chacune desdites données de poids, pour intégrer les résultats desdites multiplications et pour générer une donnée de sortie en fonction de la différence entre le résultat de l'intégration et une valeur de seuil.

11. Système selon la revendication 10, dans lequel ladite différence entre le résultat de ladite intégration et ladite valeur de seuil est calculé par utilisation d'une table.

Fig. 1

Fig. 2

( a )

( b )

( c )

Fig. 3

( a )

Fig. 4

Fig. 4

EP 0 391 404 B1

Fig. 5

19

Fig. 6

Fig. 7

Fig. 8

Fig. 9

(a)

(i)  (ii)  (iii)

(iv)  (.v)  (vi)

(vii)  (viii)

(b)

Fig. 10

Fig. 11

Fig. 12

( c )

00000001 — 21
00000010 — 22
00000100 — 23
00001000 — 24
00010000 — 25
00100000 — 26
01000000 — 27
10000000 — 28

30

10

20

Fig. 13

Fig. 14

Fig. 15

Fig. 16

Fig. 17